# EUROPEAN PATENT APPLICATION

(11) **EP 4 671 019 A1**
(43) Date of publication of application: **31.12.2025**
(21) Application number: 25178525.9
(22) Date of filing: 23.05.2025
(51) Int. Cl.: B60K 6/28, B60K 1/04, B60K 6/387, B60K 6/40, B60K 6/405, B60K 15/063, B60K 6/48

(54) **HYBRID ELECTRIC VEHICLE**

(30) Priority: 27.06.2024 JP 2024104088
(71) Applicant: TOYOTA JIDOSHA KABUSHIKI KAISHA, Toyota-shi, Aichi-ken 471-8571 (JP)
(72) Inventor: KAMISHIMA, Hirofumi, TOYOTA-SHI, AICHI-KEN, 471-8571 (JP)
(74) Representative: Cabinet Beau de Loménie

(57) **Abstract**

A hybrid electric vehicle includes an engine (14), a transaxle (15), a propeller shaft (16), a main battery (19), and a fuel tank (18). The engine is disposed forward of the driver's seat (12) and the passenger seat, and the transaxle (15) is disposed rearward of the driver's seat and the passenger seat. The propeller shaft (16) extends between the driver's seat and the passenger seat and connects the engine (14) to the transaxle (15). The fuel tank (18) is disposed rearward of the driver's seat and the passenger seat and above the transaxle. The main battery (19) is disposed rearward of the fuel tank and above the transaxle.

## Description

### CROSS-REFERENCE TO RELATED APPLICATIONS

This application is based upon and claims the benefit of priority from Japanese Patent Application No. 2024-104088, filed on June 27, 2024, the entire contents of which are incorporated herein by reference and to which the skilled person may refer when considering the present disclosure.

### BACKGROUND

### 1. Field

The present disclosure relates to a hybrid electric vehicle.

### 2. Description of Related Art

Japanese Laid-Open Patent Publication No. 2008-155829 discloses a hybrid electric vehicle. This hybrid electric vehicle is provided with a fuel tank located rearward of the driver's seat and the front passenger seat.

There is a demand for hybrid electric vehicles of the sports car type. Sports car type vehicles are desired to have high acceleration performance. Additionally, it is desirable that, in the event of a rear-end collision involving a hybrid electric vehicle, the impact load applied to the fuel tank be minimized.

In a hybrid electric vehicle, there is room for improvement in the layout of multiple devices included in the hybrid electric vehicle in order to improve acceleration performance and to reduce an impact load applied to the fuel tank at the time of a rear-end collision.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a hybrid electric vehicle includes an engine, a transaxle, a propeller shaft, a main battery, a fuel tank, a driver's seat, and a passenger seat. The transaxle includes a motor-generator configured to assist a rotation output of the engine, and a speed change mechanism configured to transmit the rotation output of the engine to a rear wheel. The propeller shaft is configured to transmit the rotation output of the engine to the transaxle. The main battery is configured to store electricity and supply the stored electricity to the motor-generator. The fuel tank is configured to store fuel of the engine. The speed change mechanism is connected to the engine via the propeller shaft. The motor-generator is connected to the propeller shaft at a position between the engine and the speed change mechanism in a vehicle longitudinal direction. The engine is disposed forward of the driver's seat and the passenger seat. The transaxle is disposed rearward of the driver's seat and the passenger seat. The propeller shaft extends between the driver's seat and the passenger seat and connects the engine to the transaxle. The fuel tank is disposed rearward the driver's seat and the passenger seat and above the transaxle. The main battery is disposed rearward of the fuel tank and above the transaxle.

Other features and aspects will be apparent from the following detailed description, the drawings, and the claims.

### BRIEF DESCRIPTION OF THE DRAWINGS

Fig. 1 is a schematic diagram of an arrangement of a propeller shaft and devices around the propeller shaft when a hybrid electric vehicle according to an embodiment is viewed from above.
Fig. 2 is a schematic diagram showing an arrangement of a propeller shaft and multiple devices around the propeller shaft when the hybrid electric vehicle of Fig. 1 is viewed from the side.
Fig. 3 is a schematic diagram showing a transaxle included in the hybrid electric vehicle of Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

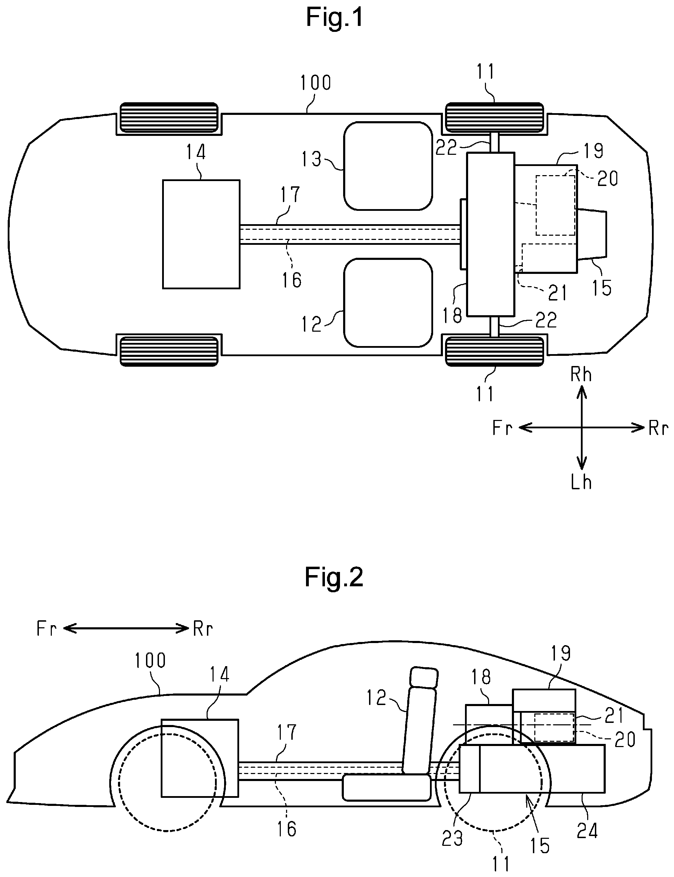

A hybrid electric vehicle 100 according to an embodiment will now be described with reference to Figs. 1 to 3.

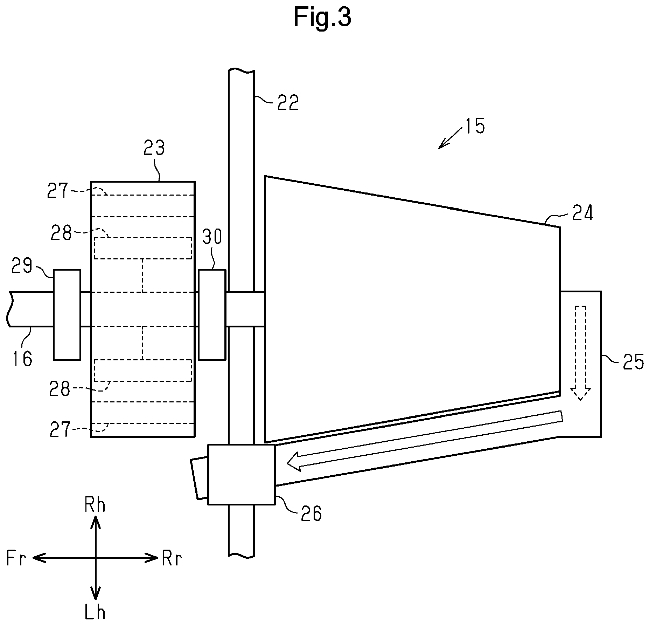

In the following description, terms related to orientations or directions, such as front, rear, upper, lower, right, and left, are defined based on the hybrid electric vehicle 100. In Figs. 1 to 3, Fr indicates the front direction of the hybrid electric vehicle 100. In Figs. 1 to 3, Rr indicates the rear direction of the hybrid electric vehicle 100. In Figs. 1 and 3, Rh indicates the right side as viewed from an occupant facing forward in the hybrid electric vehicle 100. In Figs. 1 and 3, Lh indicates the left side as viewed from an occupant facing forward in the hybrid electric vehicle 100.

### Arrangement of an Engine 14, a Transaxle 15 and a Propeller Shaft 16

Fig. 1 shows an arrangement of the propeller shaft 16 and devices around the propeller shaft 16 when the hybrid electric vehicle 100 is viewed from above. Fig. 2 shows the arrangement of the propeller shaft 16 and the devices around the propeller shaft 16 when the hybrid electric vehicle 100 is viewed from the left side in Fig. 1.

The hybrid electric vehicle 100 includes the engine 14. As shown in Figs. 1 and 2, the engine 14 is disposed forward of a driver's seat 12 and a passenger seat 13.

The hybrid electric vehicle 100 includes a transaxle 15. As shown in Figs. 1 and 2, the transaxle 15 is disposed rearward of the driver's seat 12 and the passenger seat 13.

The hybrid electric vehicle 100 includes a propeller shaft 16. As shown in Figs. 1 and 2, the propeller shaft 16 extends between the driver's seat 12 and the passenger seat 13, and connects the engine 14 to the transaxle 15. The propeller shaft 16 transmits rotation output of the engine 14 to the transaxle 15.

The hybrid electric vehicle 100 includes a torque tube 17. The torque tube 17 houses the propeller shaft 16. As shown in Figs. 1 and 2, the torque tube 17 extends between the driver's seat 12 and the passenger seat 13, and is connected to the engine 14 and the transaxle 15.

### Configuration of the Transaxle 15

Fig. 3 shows a structure of the transaxle 15 when the hybrid electric vehicle 100 is viewed from above. As shown in Fig. 3, the transaxle 15 includes a motor-generator 23 and a speed change mechanism 24.

As described with reference to Figs. 1 and 2, the propeller shaft 16 connects the engine 14 to the transaxle 15. The speed change mechanism 24 is connected to the engine 14 via the propeller shaft 16.

The speed change mechanism 24 changes the speed of the rotation transmitted from the engine 14 through the propeller shaft 16. For example, the speed change mechanism 24 includes multiple planetary gear mechanisms that define multiple gear stages having different gear ratios. The speed change mechanism 24 can change the gear ratio by switching the gear stages.

The manner in which the speed change mechanism 24 changes the speed of the rotation from the propeller shaft 16 is not limited to the manner described above. For example, the speed change mechanism 24 may include two conical pulleys and a belt looped over the pulleys. The speed change mechanism 24 changes the speed of the rotation from the propeller shaft 16 by using the difference in circumferential length between the two pulleys. The speed change mechanism 24 can change the gear ratio by changing the effective radius of each pulley where the belt is looped.

As shown in Fig. 3, the speed change mechanism 24 is connected to a transmission mechanism 25. The transmission mechanism 25 transmits the rotation transmitted from the speed change mechanism 24 to a differential gear 26.

The transmission mechanism 25 transmits rotation from the speed change mechanism 24 in the direction of arrows in Fig. 3. For example, the transmission mechanism 25 is provided with multiple gears along the dashed arrow in Fig. 3 so that the rotation is transmitted in the direction of the dashed arrow. In the transmission mechanism 25, for example, a shaft or multiple gears are installed along the solid arrow in Fig. 3, so that the rotation transmitted in the direction of the dashed arrow is transmitted in the direction of the solid arrow.

As shown in Fig. 3, the differential gear 26 is connected to drive shafts 22. As shown in Fig. 1, the drive shafts 22 are respectively connected to right and left rear wheels 11. The differential gear 26 transmits the rotation transmitted from the transmission mechanism 25 to the right and left rear wheels 11 through the drive shafts 22. The differential gear 26 distributes the rotation transmitted to the right and left rear wheels 11 in accordance with the movement of the hybrid electric vehicle 100.

As described above, the rotation output of the engine 14 is transmitted to the rear wheels 11 through the speed change mechanism 24, the transmission mechanism 25, the differential gear 26, and the drive shafts 22. The speed change mechanism 24 changes the rotation speed of the engine 14 and transmits the rotation to the rear wheels 11.

In the motor-generator 23 shown in Fig. 3, sections indicated by dashed lines represent the internal structure of the motor-generator 23. As shown in Fig. 3, the motor-generator 23 includes a rotor 28 having magnets, and a stator 27 disposed to surround the rotor 28. The rotor 28 is connected to the propeller shaft 16.

The motor-generator 23 assists the rotation output of the engine 14. The motor-generator 23 rotates the rotor 28 together with the propeller shaft 16 by supplying electricity to the stator 27. When the rotor 28 rotates together with the propeller shaft 16, the rotation output of the engine 14 transmitted to the speed change mechanism 24 through the propeller shaft 16 is increased.

The motor-generator 23 is also capable of generating power by using the rotation output of the engine 14. The motor-generator 23 is capable of generating power when the rotor 28 rotates as the propeller shaft 16 is rotated by the engine 14.

As shown in Fig. 3, the motor-generator 23 is connected to the propeller shaft 16 at a position forward of the speed change mechanism 24. As shown in Fig. 2, the motor-generator 23 is disposed between the engine 14 and the speed change mechanism 24 in the vehicle longitudinal direction. Specifically, the motor-generator 23 is connected to the propeller shaft 16 at a position between the engine 14 and the speed change mechanism 24 in the vehicle longitudinal direction.

As shown in Fig. 3, a first clutch 29 is provided in a portion of the propeller shaft 16 between the engine 14 and the motor-generator 23. The first clutch 29 is capable of selectively connecting or disconnecting the portion of the propeller shaft 16 between the engine 14 and the motor-generator 23. When the first clutch 29 disconnects the engine 14 from the motor-generator 23, the rotation of the rotor 28 by the motor-generator 23 allows the rear wheels 11 to be driven by the driving force of the motor-generator 23 independently of the operation of the engine 14.

As shown in Fig. 3, a second clutch 30 is provided in a portion of the propeller shaft 16 between the motor-generator 23 and the speed change mechanism 24. The second clutch 30 is capable of selectively connecting or disconnecting the portion of the propeller shaft 16 between the motor-generator 23 and the speed change mechanism 24.

### Arrangement of the Devices Above the Transaxle 15

The hybrid electric vehicle 100 includes a fuel tank 18. The fuel tank 18 stores fuel for the engine 14. As shown in Figs. 1 and 2, the fuel tank 18 is disposed rearward of the driver's seat 12 and the passenger seat 13 and above the transaxle 15.

The hybrid electric vehicle 100 includes a main battery 19. The main battery 19 stores electricity. For example, the main battery 19 stores electricity generated by the motor-generator 23. The main battery 19 supplies the stored electricity to the motor-generator 23. The motor-generator 23 rotates the rotor 28 by supplying electricity supplied from the main battery 19 to the stator 27.

As shown in Fig. 2, the main battery 19 is disposed rearward of the fuel tank 18 and above the transaxle 15. The rear end of the transaxle 15 is located rearward of the main battery 19.

The farther a heavy object is positioned from the center of gravity of the hybrid electric vehicle 100, the greater the yaw moment of inertia generated in the vehicle 100 becomes. As fuel is consumed, the weight of the rear portion of the vehicle 100, in which the fuel tank 18 is mounted, decreases. For example, when the fuel tank 18 is disposed rearward of the main battery 19 and above the transaxle 15, the yaw moment of inertia generated during turning of the vehicle 100 varies significantly depending on the amount of fuel in the fuel tank 18, which is located relatively far from the center of gravity. When the yaw moment of inertia changes significantly, the handling characteristics of the vehicle 100 experienced by the user also change significantly.

In contrast, in the present embodiment, the fuel tank 18 is disposed forward of the main battery 19. As compared with a case in which the fuel tank 18 is disposed rearward of the main battery 19, the position of the fuel tank 18, the weight of which changes due to consumption of fuel, is closer to the center of gravity of the vehicle 100. As compared with a case in which the fuel tank 18 is disposed rearward of the main battery 19, the position of the main battery 19, which is a heavy object with an unchanging weight, is farther from the center of gravity of the vehicle 100.

Accordingly, in the present embodiment, changes in yaw moment of inertia due to fuel consumption are reduced. In this manner, by optimizing the arrangement of the main battery 19 and the fuel tank 18, it is possible to reduce changes in the handling characteristics caused by fuel consumption.

The hybrid electric vehicle 100 includes a power control unit 20 and an auxiliary battery 21 below the main battery 19. In Fig. 1, devices disposed immediately below the main battery 19, that is, the power control unit 20 and the auxiliary battery 21, are indicated by dashed lines. In Fig. 1, a portion of the transaxle 15 that is disposed directly below the main battery 19 is also indicated by the dashed lines.

The auxiliary battery 21 stores electricity similarly to the main battery 19. For example, the auxiliary battery 21 stores electricity at a lower voltage than the main battery 19. The auxiliary battery 21 supplies the stored electricity to an electric device different from the motor-generator 23. For example, the auxiliary battery 21 supplies electricity to an electronic control unit that controls the motor-generator 23.

As shown in Fig. 1, the power control unit 20 is disposed to the right of the auxiliary battery 21. In Fig. 2, the power control unit 20, which is disposed to the right of the auxiliary battery 21, is indicated by dashed lines. The arrangement of the auxiliary battery 21 and the power control unit 20 may be reversed.

The power control unit 20 is capable of converting power. The main battery 19 stores DC electricity. The power control unit 20 converts DC power stored in the main battery 19 into AC power and supplies the AC power to the motor-generator 23. Further, the power control unit 20 may convert AC power generated by the motor-generator 23 into DC power and supply the DC power to the main battery 19.

The power control unit 20 is capable of raising the voltage of electricity. The power control unit 20 raises the voltage of the electricity stored in the main battery 19 and supplies the electricity to the motor-generator 23.

In this manner, the power control unit 20 converts the power in the main battery 19, raises the voltage of the power, and supplies the power to the motor-generator 23.

As shown in Figs. 1 and 2, the auxiliary battery 21 and the power control unit 20 are disposed above the transaxle 15 and below the main battery 19.

In Fig. 2, the horizontal long-dash short-dash line through the fuel tank 18 indicates the center of the fuel tank 18 in the height direction. As shown in Fig. 2, the center of the fuel tank 18 in the height direction is located between the upper end and the lower end of the auxiliary battery 21. The center of the fuel tank 18 in the height direction is located between the upper end and the lower end of the power control unit 20. In other words, the auxiliary battery 21 and the power control unit 20 are disposed at the height at which the fuel tank 18 is located.

### Operation of the Present Embodiment

In a rear-wheel drive vehicle, traction is readily achieved when a heavy object is arranged in the rear portion of the vehicle. In the hybrid electric vehicle 100, the transaxle 15, the fuel tank 18, and the main battery 19 are heavy objects. Since these heavy objects are concentrated in the rear portion of the hybrid electric vehicle 100, the acceleration performance of the hybrid electric vehicle 100 is improved.

The fuel tank 18 is disposed forward of the main battery 19. Therefore, at the time of a rear-end collision of the hybrid electric vehicle 100, an impact load is applied to the main battery 19 before being applied to the fuel tank 18.

### Advantages of the Present Embodiment

(1) The hybrid electric vehicle 100 is capable of improving acceleration performance while suppressing the application of impact load to the fuel tank 18 during a rear-end collision.
(2) The hybrid electric vehicle 100 includes the auxiliary battery 21, which stores electricity and supplies the stored electricity to electric devices other than the motor-generator 23. The hybrid electric vehicle 100 includes the power control unit 20, which converts the power in the main battery 19, raises the voltage of the power, and supplies the power to the motor-generator 23. The auxiliary battery 21 and the power control unit 20 are disposed above the transaxle 15 and below the main battery 19.

The auxiliary battery 21 and the power control unit 20 are disposed between the main battery 19, located rearward of the fuel tank 18, and the transaxle 15. Therefore, at the time of a rear-end collision of the hybrid electric vehicle 100, the impact load is applied to the main battery 19, the auxiliary battery 21, and the power control unit 20 before being applied to the fuel tank 18. As a result, the hybrid electric vehicle 100 is further capable of suppressing the application of impact load to the fuel tank 18.

(3) The auxiliary battery 21 and the power control unit 20 are disposed at the height at which the fuel tank 18 is located.

The auxiliary battery 21 and the power control unit 20 are disposed rearward of the fuel tank 18 and at the same height as the fuel tank 18. That is, the auxiliary battery 21 and the power control unit 20 are disposed directly behind the fuel tank 18. Thus, when the hybrid electric vehicle 100 is involved in a rear-end collision, the auxiliary battery 21 and the power control unit 20 reliably receive the impact load before the fuel tank 18. Accordingly, the hybrid electric vehicle 100 is further capable of suppressing the application of impact load to the fuel tank 18.

(4) The rear end of the transaxle 15 is located rearward of the main battery 19.

At the time of a rear-end collision of the hybrid electric vehicle 100, the transaxle 15, the propeller shaft 16, and the engine 14 receive the impact load before the main battery 19. As a result, the hybrid electric vehicle 100 is capable of suppressing the application of impact load to the main battery 19.

(5) The hybrid electric vehicle 100 includes the torque tube 17, which houses the propeller shaft 16. The torque tube 17 extends between the driver's seat 12 and the passenger seat 13, and is connected to the engine 14 and the transaxle 15.

At the time of a rear-end collision of the hybrid electric vehicle 100, the torque tube 17 receives the impact load before the main battery 19. As a result, the hybrid electric vehicle 100 is capable of suppressing the application of impact load to the main battery 19.

The torque tube 17 and the propeller shaft 16 extend between the driver's seat 12 and the passenger seat 13. The sitting position is lowered as compared with a case in which the torque tube 17 and the propeller shaft 16 are arranged under the floor. Therefore, the proportions of the hybrid electric vehicle 100 are made more characteristic of a sports car.

### Modifications

The above-described embodiment may be modified as follows. The above-described embodiment and the following modifications can be combined as long as the combined modifications remain technically consistent with each other.

In the hybrid electric vehicle 100, as shown in Fig. 1, the driver's seat 12 is disposed on the left side in Fig. 1, and the passenger seat 13 is disposed on the right side in Fig. 1. The arrangement of the driver's seat 12 and the passenger seat 13 may be reversed.

As described with reference to Fig. 3, the rotation output of the engine 14 is transmitted through the speed change mechanism 24, the transmission mechanism 25, the differential gear 26, and the drive shafts 22, in that order to the rear wheels 11. However, the manner in which the rotation output of the engine 14 is transmitted to the rear wheels 11 is not limited to the above-described embodiment. For example, when the drive shafts 22 are disposed rearward of the speed change mechanism 24, the hybrid electric vehicle 100 does not necessarily need to include the transmission mechanism 25.

The above-described hybrid electric vehicle 100 includes the first clutch 29 and the second clutch 30. The hybrid electric vehicle 100 may be configured without either the first clutch 29, the second clutch 30, or both.

The auxiliary battery 21 and the power control unit 20 are disposed above the transaxle 15 and below the main battery 19. The auxiliary battery 21 and the power control unit 20 are disposed at the height at which the fuel tank 18 is located. However, the arrangement of the auxiliary battery 21 and the power control unit 20 is not limited to the above-described embodiment.

For example, the auxiliary battery 21 may be disposed below the transaxle 15. The auxiliary battery 21 may also be disposed above the main battery 19. Alternatively, the auxiliary battery 21 may be disposed forward of the driver's seat 12 and the passenger seat 13. The auxiliary battery 21 may also be disposed at a height different from that of the fuel tank 18.

For example, the power control unit 20 may be disposed below the transaxle 15. The power control unit 20 may also be disposed above the main battery 19. Alternatively, the power control unit 20 may be disposed forward of the driver's seat 12 and the passenger seat 13. The power control unit 20 may also be disposed at a height different from that of the fuel tank 18.

Further, the above-described hybrid electric vehicle 100 may be configured without either the auxiliary battery 21, the power control unit 20, or both.

The rear end of the transaxle 15 is located rearward of the main battery 19. However, the rear end of the transaxle 15 does not necessarily need to be located rearward of the main battery 19. For example, the rear end of the transaxle 15 may be located forward of the rear end of the main battery 19.

The above-described hybrid electric vehicle 100 includes the torque tube 17. However, the hybrid electric vehicle 100 does not necessarily need to include the torque tube 17.

The torque tube 17 extends between the driver's seat 12 and the passenger seat 13, and is connected to the engine 14 and the transaxle 15. However, the structure of the torque tube 17 is not limited to the above-described embodiment. For example, the torque tube 17 may house the propeller shaft 16 but may disconnected from either the engine 14, the transaxle 15, or both.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A hybrid electric vehicle, comprising:
an engine (14);
a transaxle (15) including:
a motor-generator (23) configured to assist a rotation output of the engine (14); and
a speed change mechanism (24) configured to transmit the rotation output of the engine (14) to a rear wheel (11);
a propeller shaft (16) configured to transmit the rotation output of the engine (14) to the transaxle (15);
a main battery (19) configured to store electricity and supply the stored electricity to the motor-generator (23);
a fuel tank (18) configured to store fuel of the engine (14); and
a driver's seat (12) and a passenger seat (13), wherein
the speed change mechanism (24) is connected to the engine (14) via the propeller shaft (16),
the motor-generator (23) is connected to the propeller shaft (16) at a position between the engine (14) and the speed change mechanism (24) in a vehicle longitudinal direction,
the engine (14) is disposed forward of the driver's seat (12) and the passenger seat (13),
the transaxle (15) is disposed rearward of the driver's seat (12) and the passenger seat (13),
the propeller shaft (16) extends between the driver's seat (12) and the passenger seat (13) and connects the engine (14) to the transaxle (15),
the fuel tank (18) is disposed rearward the driver's seat (12) and the passenger seat (13) and above the transaxle (15), and
the main battery (19) is disposed rearward of the fuel tank (18) and above the transaxle (15).

2. The hybrid electric vehicle according to claim 1, further comprising:
an auxiliary battery (21) configured to store electricity and supply the stored electricity to an electric device different from the motor-generator (23); and
a power control unit (20) configured to convert power in the main battery (19), raise a voltage of the power, and supply the power to the motor-generator (23),
wherein the auxiliary battery (21) and the power control unit (20) are disposed above the transaxle (15) and below the main battery (19).

3. The hybrid electric vehicle according to claim 2, wherein the auxiliary battery (21) and the power control unit (20) are disposed at a height at which the fuel tank (18) is located.

4. The hybrid electric vehicle according to any one of claims 1 to 3, wherein a rear end of the transaxle (15) is located rearward of the main battery (19).

5. The hybrid electric vehicle according to claim 4, further comprising a torque tube (17) that houses the propeller shaft (16),
wherein the torque tube (17) extends between the driver's seat (12) and the passenger seat (13) and is connected to the engine (14) and the transaxle (15).
